(19) **Europäisches Patentamt**

**European Patent Office**

**Office européen des brevets**

(11) Numéro de publication: **0 169 824**
**B1**

(12) # FASCICULE DE BREVET EUROPEEN

(45) Date de publication du fascicule du brevet:
08.11.89

(51) Int. Cl.⁴: **C 08 J 11/06**, **B 29 B 17/00**,
**B 32 B 27/06**

(21) Numéro de dépôt: **85870085.9**

(22) Date de dépôt: **17.06.85**

(54) Matériau, son procédé de fabrication et ses applications.

(30) Priorité: **28.06.84 LU 85439**

(43) Date de publication de la demande:
**29.01.86 Bulletin 86/5**

(45) Mention de la délivrance du brevet:
**08.11.89 Bulletin 89/45**

(84) Etats contractants désignés:
**AT CH DE FR GB IT LI NL SE**

(56) Documents cités:
**AU-B-496 570**
**FR-A-2 258 414**
**FR-A-2 458 385**
**US-A-3 671 615**

**CHEMICAL ABSTRACTS, vol. 86, no. 24, 13 juin 1977, page 224, no. 174926x, Columbus, Ohio, US; N. NIKOLACV et al.: "Protection of shaft steel components from corrosion by coating with waste plastic materials" & FREIBERG. FORSCHUNGSH. B 1976, B189, 96-101**

**Le dossier contient des informations techniques présentées postérieurement au dépôt de la demande et ne figurant pas dans le présent fascicule.**

(73) Titulaire: **PHENIX WORKS S.A., Quai Hoover 1,**
**B-4110 Flemalle (BE)**
Titulaire: **I N T R A D E L, Association Intercommunale de Traitement des Déchets de la Région Liégeoise, Société Cooperative - Association de communes Hotel de Ville de Liège Port de Herstal, Pré Wigi,**
**B-4400 Herstal (BE)**

(72) Inventeur: **Pelerin, Jacques, Rue des Hérissons, 4,**
**B-4040 Tilff (BE)**
Inventeur: **Michaux, Joseph, Rue sur les Thiers, 257,**
**B-4400 Herstal (BE)**
Inventeur: **Noirhomme, André, Route du Ménobu, 548,**
**B-4870 Theux (BE)**

(74) Mandataire: **Lacasse, Lucien Emile, CENTRE DE RECHERCHES METALLURGIQUES Abbaye du Val-Benoît 11, rue Ernest Solvay, B-4000 Liège (BE)**

## Description

La présente invention a trait à un matériau, à son procédé de fabrication et aussi à ses applications.

Il est connu, depuis fort longtemps, d'associer des matériaux de nature différente pour former des substrats appelés «sandwich», désignés ci-après sous le vocable «substrats».

Cette manière de procéder permet d'obtenir des substrats qui présentent des caractéristiques mécaniques fort intéressantes, par exemple absorption acoustique, grand moment d'inertie, grande rigidité transversale, avec en plus un poids par unité de surface assez faible, ce qui convient fort bien pour des applications telles que les transports.

Toutefois, de par leur nature, c'est-à-dire l'association de matériaux différents et par le type de matériaux utilisés, par exemple des polymères, le coût de fabrication de ces substrats est fort élevé.

Etant donné que des matières polymères entrent souvent dans la réalisation des dits substrats, le coût de fabrication de celles-ci influence très fort le prix de revient du substrat élaboré, ce qui constitue sans nul doute un handicap important pour son développement commercial.

Le propos de la présente invention est de décrire un nouveau matériau polymère qui ne présente pas cet inconvénient; de plus on expliquera aussi son procédé de fabrication et ses applications.

Le matériau polymère, objet de la présente invention, est essentiellement caractérisé en ce qu'il est obtenu à partir d'un mélange homogène comprenant au moins une matière polymérique de régénération, pour au moins 20% en poids du mélange précité, ledit mélange contenant également au moins 1% en poids de fibres cellulosiques et moins de 10% en poids d'une polyoléfine modifiée par un monomère choisi dans le groupe formé par les acides carboxyliques insaturés, les anhydrides correspondants et leurs dérivés.

Les termes «matière polymérique de régénération» désignent une matière polymérique obtenue à partir de produits polymériques finis ou semifinis, par exemple des produits d'emballage, comme des bouteilles, flacons, sacs..., ou des rebuts recyclés lors de leur fabrication; ces produits finis ou semi-finis ayant subi divers traitements destinés à leur restituer les propriétés nécessaires à les rendre aptes à être incorporés au mélange précité; ces termes ne s'appliquent donc pas aux matières vierges utilisées en général en mélange pour produire les matières polymériques.

Suivant une première modalité de réalisation du matériau polymère de l'invention, celui-ci est obtenu à partir d'un mélange contenant un ou plusieurs des produits ci-après, sous forme de matière polymérique de régénération ou non:

– films polyoléfiniques,
– (i) polyéthylène haute densité, (ii) polyéthylène, (iii) polychlorure de vinyle, (flacons en i, ii et iii)

– polyacrylonitriles,
– polyamides.

Suivant une modalité d'utilisation du matériau polymère, objet de la présente invention, il est mis en contact avec au moins un matériau, de préférence métallique.

Suivant une autre mise en œuvre de la modalité précédente, le matériau polymère est mis en contact avec au moins un matériau métallique revêtu, de préférence une tôle d'acier revêtue.

Suivant encore une autre mise en œuvre du matériau polymère de l'invention, celui-ci est mis en contact avec de l'acier inoxydable.

Suivant une autre modalité de mise en œuvre du matériau polymère, objet de l'invention, celui-ci est mis en contact avec de l'aluminium, ou du cuivre ou du zinc ou leurs alliages.

Suivant une modalité préférentielle de mise en œuvre du matériau polymère de la présente invention, celui-ci est déposé ou collé sous forme de couche sur un support métallique ou compris entre deux supports métalliques ou non, da manière à réaliser un élément à structure sandwich, de préférence du type métal – plastique – métal.

## Revendications

1. Procédé pour faire adhérer à un support, un matériau polymère constitué d'un mélange homogène comprenant au moins 20% en poids d'une matière polymérique de régénération et au moins 1% en poids de fibres cellulosiques, caractérisé en ce que le mélange homogène contient en outre une polyoléfine modifiée par un monomère choisi dans le groupe formé par les acides carboxyliques insaturés, les anhydrides correspondants et leurs dérivés, et en ce que la teneur en polyoléfine modifiée est telle qu'il y ait adhésion entre le support et le matériau polymère et que cette teneur en polyoléfine modifiée soit inférieure à 10% en poids par rapport audit mélange homogène.

2. Produit obtenu selon le procédé de la revendication 1, caractérisé en ce qu'il comporte une couche dudit matériau polymère appliquée sur un support.

3. Produit suivant la revendication 2, caractérisé en ce que le support est un matériau métallique.

4. Produit suivant la revendication 3, caractérisé en ce que le support est un matériau métallique revêtu.

5. Produit suivant la revendication 4, caractérisé en ce que le support est une tôle d'acier revêtue.

6. Produit suivant la revendication 3, caractérisé en ce que le support est une tôle d'acier inoxydable.

7. Produit suivant la revendication 3, caractérisé en ce que le matériau de support est constitué d'aluminium, de cuivre, de zinc ou de leurs alliages.

## Claims

1. A process for causing the adhesion to a substrate of a polymeric material consisting of a homogeneous mixture comprising at least 20% by weight of a regenerated polymeric substance and at least 1% by weight of cellulose fibres, characterized in that the homogeneous mixture also contains a polyolefin modified by a monomer selected from the group comprising unsaturated carboxylic acids, the corresponding anhydrides and derivatives thereof, and in that the proportion of modified polyolefin is such that there is adhesion between the substrate and the polymeric material and such that this proportion of modified polyolefin is less than 10% by weight, based on the said homogeneous mixture.

2. A product obtained by the process according to Claim 1, characterized in that it has a layer of the said polymeric material applied to a substrate.

3. A product according to Claim 2, characterized in that the substrate is a metallic material.

4. A product according to Claim 3, characterized in that the substrate is a coated metallic material.

5. A product according to Claim 4, characterized in that the substrate is a coated steel sheet.

6. A product according to Claim 3, characterized in that the substrate is a stainless steel sheet.

7. A product according to Claim 3, characterized in that the substrate consists of aluminium, copper, zinc or alloys thereof.

## Patentansprüche

1. Verfahren zur Haftverbindung eines Trägers mit einem aus einem homogenen Gemisch von mindestens 20 Gew.-% eines regenerierten Polymerstoffs und mindestens 1 Gew.-% Cellulosefasern bestehenden Polymermaterial, dadurch gekennzeichnet, daß das homogene Gemisch ferner ein mit einem aus der ungesättigte Carbonsäuren, die entsprechenden Anhydride und deren Derivate umfassenden Gruppe ausgewählten Monomeren modifiziertes Polyolefin enthält, und daß das modifizierte Polyolefin in einer solchen Menge vorliegt, daß Haftung zwischen dem Träger und dem Polymermaterial bewirkt wird und der Gehalt an modifiziertem Polyolefin weniger als 10 Gew.-% bezogen auf besagtes homogenes Gemisch beträgt.

2. Gemäß dem Verfahren nach Anspruch 1 erhaltenes Produkt, dadurch gekennzeichnet, daß es eine auf einen Träger aufgebrachte Schicht besagten Polymermaterials enthält.

3. Produkt nach Anspruch 2, dadurch gekennzeichnet, daß der Träger ein metallisches Material ist.

4. Produkt nach Anspruch 3, dadurch gekennzeichnet, daß der Träger ein verkleidetes metallisches Material ist.

5. Produkt nach Anspruch 4, dadurch gekennzeichnet, daß der Träger ein verkleidetes Stahlblech ist.

6. Produkt nach Anspruch 3, dadurch gekennzeichnet, daß der Träger ein rostfreies Stahlblech ist.

7. Produkt nach Anspruch 3, dadurch gekennzeichnet, daß der Träger aus Aluminium, Kupfer, Zink oder deren Legierungen besteht.